Europäisches Patentamt

European Patent Office

Office européen des brevets

(11) Veröffentlichungsnummer: **0 110 304**
**A2**

(12) # EUROPÄISCHE PATENTANMELDUNG

(21) Anmeldenummer: **83111683.5**

(22) Anmeldetag: **23.11.83**

(51) Int. Cl.³: **H 04 L 9/00**

(30) Priorität: **02.12.82 DE 3244536**

(43) Veröffentlichungstag der Anmeldung: **13.06.84**
**Patentblatt 84/24**

(84) Benannte Vertragsstaaten: **AT CH DE LI NL**

(71) Anmelder: **ANT Nachrichtentechnik GmbH, Gerberstrasse 33, D-7150 Backnang (DE)**

(72) Erfinder: **Ostermann, Bernd, Dipl.-Ing., Sulzbacher Strasse 51, D-7150 Backnang (DE)**
Erfinder: **Bitzer, Wolfgang, Dipl.-Ing., Rechbergstrasse 15, D-7153 Weissach im Tal (DE)**

(74) Vertreter: **Schickle, Gerhard, Dipl.-Ing. et al, ANT Nachrichtentechnik GmbH Patent- und Lizenzabteilung Gerberstrasse 33, D-7150 Backnang (DE)**

(54) Verfahren zur Übertragung von Grundschlüsseln an Chiffriergeräte.

(57) Die Erfindung betrifft ein Verfahren zur Übermittlung von Grundschlüsseln an Chiffriergeräte zur Übertragung verschlüsselter Nachrichten, wobei zur Verschlüsselung der Nachricht der Grundschlüssel mit einem variablen Schlüssel gemeinsam zur Einstellung des Chiffriergerätes angewendet wird und wobei der Grundschlüssel auf einem Datenträger aufgezeichnet wird und wobei dieser Datenträger in gesicherter Weise den zu versorgenden Chiffriergeräten überbracht wird.

EP 0 110 304 A2

K1 E7/Ruf/wei
BK 81/58

# Verfahren zur Übertragung von Grundschlüsseln an Chiffriergeräte

Moderne elektronische Schlüsselgeräte zur verschlüsselten Übertragung oder Abspeicherung von Daten, Fernschreibtexten oder digitalisierten Sprachsignalen gelten als so sicher, daß der Aufbau der Geräte dem Gegner ruhig bekannt sein kann und er durch diese Kenntnis doch nicht in die Lage versetzt wird, die verschlüsselten Daten unbefugt zu dechiffrieren, solange er den in die Schlüsselgeräte eingegebenen und der Verschlüsselung zugrundeliegenden "Grundschlüssel" nicht kennt. Nur derjenige, der außer dem Schlüsselgerät auch den richtigen Grundschlüssel besitzt, kann das Chiffrat entschlüsseln.

Dieser Grundschlüssel muß vor einer Ver- oder Entschlüsselung in das Schlüsselgerät eingegeben werden. Er besteht aus einer Informationsmenge von z.B. 100 bis 200 Bit und ist das wirklich streng geheimzuhaltende Element bei der Verschlüsselung.

Er muß vor einer chiffrierten Übertragung in geeigneter geheimer Weise zwischen den Endteilnehmern vereinbart bzw.
diesen überbracht werden.

Eine übliche Methode ist es z.B., den Schlüssel auf einem
Datenträger (Lochstreifen, Lochkarte o.ä.) abzuspeichern
und in versiegelten Behältnissen durch Kurier zu überbringen. Natürlich kann er z.B. auch auf dem Papier aufgezeichnet und über eine Tastatur in das Schlüsselgerät eingegeben
werden.

Dabei bleibt immer noch ein Rest Unsicherheit, daß der
Grundschlüssel dennoch verraten wird, was natürlich unter
allen Umständen vermieden werden muß.

Der Erfindung liegt die Aufgabe zugrunde, diese Unsicherheit
weiter einzuschränken.

Die Aufgabe wird gelöst wie im Anspruch 1 beschrieben, der
Unteranspruch gibt eine vorteilhafte Weiterbildung an. Dadurch, daß der Grundschlüssel nur in verschlüsselter Form
übermittelt wird, ist die Geheimhaltung der zu übertragenden Nachrichten sicherer.

In der Ausführungsform gemäß Anspruch 2 wird der von einem
Quasizufallsfolgen-Generator erzeugte Grundschlüssel als
verschlüsselter Grundschlüssel betrachtet, der durch einen
Entschlüsselvorgang im Chiffriergerät in den endgültigen
Grundschlüssel umgesetzt wird und dann erst zur Einstellung des Chiffriergerätes dient.

Ein Auslesen dieses endgültigen Grundschlüssels aus dem
Chiffriergerät ist nicht mehr möglich.

Das erfindungsgemäße Verfahren hat den großen Vorzug, daß
der wirkliche Grundschlüssel nur in den Schlüsselgeräten selbst und sonst nirgends auftritt, aus denen er aber nicht ausgelesen werden kann, so daß er also nicht verraten werden kann.

05 Ein Verrat des Grundschlüssels ist jetzt höchstens noch möglich, wenn sowohl die übermittelte Zufallsfolge als auch der in den Schlüsselgeräten vorhandene Schlüssel zur Umwandlung dieser Zufallsfolge in den Grundschlüssel bekannt sind.

- 1 -

ANT Nachrichtentechnik GmbH
Gerberstrasse 33
D-7150 Backnang

K1 E7/Ruf/wei
BK 81/58

Patentansprüche

1. Verfahren zur Übermittlung von Grundschlüsseln an Chiffriergeräte zur Übertragung verschlüsselter Nachrichten, wobei zur Verschlüsselung der Nachricht der Grundschlüssel mit einem variablen Schlüssel gemeinsam zur Einstellung des Chiffriergerätes angewendet wird, wobei der Grundschlüssel auf einem Datenträger aufgezeichnet wird und wobei dieser Datenträger in gesicherter Weise den zu versorgenden Chiffriergeräten überbracht wird, dadurch gekennzeichnet, daß der Grundschlüssel mit Hilfe eines Quasizufallsfolgen-Generators erzeugt wird und danach mit einem den zu versorgenden Chiffriergeräten bekannten Schlüssel verschlüsselt wird, daß der so verschlüsselte Grundschlüssel auf dem Datenträger abgespeichert wird, daß dieser Grundschlüssel in den zu versorgenden Chiffriergeräten einem Entschlüsselungsvorgang unterworfen wird und danach zur Einstellung des Chiffriergerätes verwendet wird, und daß dieser entschlüsselte Grundschlüssel nicht mehr ausgelesen werden kann.

0110304
BK 81/58

2. Verfahren nach Anspruch 1, <u>dadurch gekennzeichnet</u>, daß der durch einen Quasizufallsfolgen-Generator erzeugte Grundschlüssel in unveränderter Form auf dem Datenträger abgespeichert wird.